## Europäisches Patentamt

## European Patent Office

## Office européen des brevets

(19)

(11) Veröffentlichungsnummer: **0 081 652**
**B1**

(12) **EUROPÄISCHE PATENTSCHRIFT**

(45) Veröffentlichungstag der Patentschrift:
20.03.85

(51) Int. Cl.⁴: **F 16 L 25/02,** F 16 L 58/00,
C 23 F 13/00

(21) Anmeldenummer: 82109449.7

(22) Anmeldetag: 13.10.82

(54) Isolierringe bzw. Isolierstücke zur elektrischen Trennung kathodischer Schutzbereiche in Förderleitungen.

(30) Priorität: 14.12.81 DE 3149414

(43) Veröffentlichungstag der Anmeldung:
22.06.83 Patentblatt 83/25

(45) Bekanntmachung des Hinweises auf die Patenterteilung:
20.03.85 Patentblatt 85/12

(84) Benannte Vertragsstaaten:
BE DE FR GB NL

(56) Entgegenhaltungen:
DE - A - 2 817 666
GB - A - 1 532 730

(73) Patentinhaber: CHEMISCHE WERKE HÜLS AG, - RSP Patente / PB 15 - Postfach 13 20, D-4370 Marl 1 (DE)

(72) Erfinder: Wendland, Edmund, Sachsenstrasse 60, D-4370 Marl (DE)

## Beschreibung

Förderleitungen für flüssige oder gasförmige Stoffe, wie Treibstoffe, Mineralöl, Benzol, Erdgas, Cumol, technische Gase, Wasser oder Sole, werden durch elektrochemische Schutzverfahren gegen Korrosion geschützt. Dieser sogenannte kathodische Korrosionsschutz geschieht in bekannter Weise durch Beaufschlagen der Rohrleitungen mit elektrischem Strom. An Messstellen, Abzweigungen oder Pumpstationen ist es erforderlich, elektrische Trennstellen einzubauen. Das geschieht durch sogennante Isolierstücke oder Isolierringe in Flanschverbindungen.

Als elektrisch isloierende Werkstoffe werden dabei Verbundschichtstoffe aus kunstharzgetränktem Gewebe verwendet. Als Kunstoffe sind hier bekanntgeworden Phenolharze oder Melaminharze. Die rinförmigen isolierenden Teile in den Isolierstücken oder die Isolierringe selbst bestehen aus aufgewickelten, kunstharzgetränkten Geweben oder auch Polyimidharzen oder Aramidharzen (DE-A1 Nr, 2817666). Flachdichtungen können auch aus Kautschukteilen bestehen, wie z.B. Acrylnitril/Styrol-Kautschuken oder Fluorekastomeren.

Die britische Patentschrift Nr. 532730 gibt als wesentliche Lehre die Anweisung, die Flanschteile mit wärmehärtendem Harz auf der Basis eines Epoxiharzes und eines carbonylgruppentragenden Polyesters zu überziehen. Zusätzlich soll ein Isolierring aus einem druckfesten, elastischen, elektrisch isolierenden Material verwendet werden, über dessen Art nichts näher ausgesagt wird, das aber offensichtlich aus den zuvor gennanten Harzen ausgewählt werden soll.

Bei den heute üblichen höheren Betriebsdrukken in Fernleitungen genügen die bekannten Isolierstoffe nicht immer den gewünschten Anforderungen, sei es, dass sie nicht ausreichend stabil gegenüber dem zu fördernden Medium sind, so dass Undichtigkeiten in den Rohrleitungssystemen auftreten. Schliesslich sollen die Isolierteile auch ausreichend druckfest gegenüber an den Leitungen auftretenden Kräften sein, sei es durch äussere Einwirkung oder durch Druckwechsel des zu fördernden Mediums. Schliesslich soll auch eine kraftschlüssige Verbindung der elektrisch getrennten Teile erhalten bleiben.

Aufgabe der Erfindung ist es, Isolierringe bereitzustellen, die insbesondere bei Betriebsdrucken bis 100 bar gegenüber Gleichspannungen ausreichend isolieren und auch nicht zu Undichtigkeiten in den Rohrleitungen führen.

Die Lösung der Aufgabe gelingt, wenn man Metallringe einsetzt, die mit aliphatischen Polyamiden mit mindestens 10 Kohlenstoffatomen pro Carbonamidgruppe beschichtet sind.

Geeignete aliphatische Polyamide sind Polyamid 11 mit 10 Kohlenstoffatomen pro Carbonamidgruppe oder Polyamid 12 (Polylaurinlactam) mit 11 Kohlenstoffatomen pro Carbonamidgruppe, insbesondere Polyamid 12.

Als Metalleinlagen der Isolierringe bzw. Isolierstücke können Stähle, wie Chromnickelstähle oder auch Kupfer oder Kupferlegierungen verwendet werden.

Die Beschichtung der Metallringe geschieht insbesondere nach dem Wirbelsinterverfahren. Die Vorbehandlung der Metallteile durch Sandstrahlen und/oder Entfetten oder auch das Vorbehandeln mit einem Haftvermittler geschieht in üblicher Weise. Die Schichtdicke des aufgebrachten Polyamids beträgt im allgemeinen 0,1 bis 1, insbesondere 0,8 bis 1mm.

Das Polyamid kann selbstverständlich die üblichen Zusätze, wie Stabilisatoren oder Keimbildner, enthalen; insoweit werden unter aliphatischen Polyamiden gemäss der Erfindung solche verstanden, welche die üblichen Hilfsmittel enthalten.

Die Isolierringe werden in üblichen Fernleitungen mit allen Durchmessern bei Betriebsdrucken bis 100 bar eingesetzt. Die Dicke der Isolierringe liegt im üblichen Bereich von 20 mm. Sie haben sich bei Fördertemperaturen bis 60, insbesondere bis 20°C, bewährt.

Die Isolierringe werden folgenden elektrischen Prüfungen unterworfen:

Isolierringe werden im trockenen Zustand mit einer Prüfspannung von mindestens 5000 V gemäss VDE 0303, Teil 2, über die Dauer von mindestens 1 min geprüft. Hierbei dürfen keine Sprüherscheinungen und Durchschläge auftreten (TRGL 134).

Die Isolierringe der Erfindung haben sich bewährt in Fernleitungen für Ethylen, Sauerstoff, Flüssiggase, Wasserstoff und Sole.

Die Leitungen hatten dabei Durchmesser von 100 bis 300 mm; es wurde bei Betriebsdrucken von 25 bis 100 bar gearbeitet. Sie haben sich dabei bewährt zur Abgrenzung kathodischer Schutzbereiche.

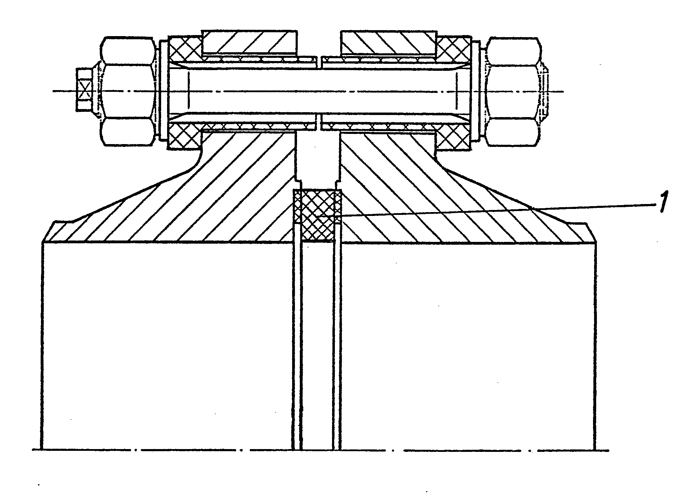

In der beigefügten Abbildung ist die Hälfte einer Flanschverbindung im Querschnitt dargestellt, wobei 1 den Querschnitt des Isolierringes darstellt.

## Patentansprüche

1. Isolierringe bzw. Isolierstücke zum elektrischen Trennen kathodischer Schutzbereiche in Förderleitungen, dadurch gekennzeichnet, dass die Isolierringe bzw. Isolierstücke aus Metallringen bestehen, die mit aliphatischen Polyamiden mit mindestens 10 Kohlenstoffatomen pro Carbonamidgruppe beschichtet sind.

2. Isolierringe bzw. Isolierstücke nach Anspruch 1, dadurch gekennzeichnet, dass das aliphatische Polyamid Polylaurinlactam ist.

3. Isolierringe bzw. Isolierstücke nach den Ansprüchen 1 und 2, dadurch gekennzeichnet, dass die Schichtdicke des Polyamids 0,1 bis 1,0 mm beträgt.

4. Verwendung der Isolierringe bzw. Isolierstücke nach den Ansprüchen 1 bis 3 in sauerstoffführenden Rohrleitungen bei Sauerstoffdrücken bis 100 bar und Temperaturen bis 60°C.

## Claims

1. Insulating rings or insulating pieces for electrically separating cathodic protective regions in conveying lines, characterised in that the insulating rings or insulating pieces are made of metal rings which are coated with aliphatic polyamides having at least 10 carbon atoms per carboxamide group.

2. Insulating rings or insulating pieces according to Claim 1, characterised in that the aliphatic polyamide is polylauro lactam.

3. Insulating rings or insulating pieces according to Claim 1 or 2, characterised in that the thickness of the polyamide layer is 0.1 to 1.0 mm.

4. The use of the insulating rings or insulating pieces according to any of Claims 1 to 3 in oxygen-conducting pipes under oxygen pressures up to 100 bar and at temperatures up to 60°C.

**Revendications**

1. Bagues isolantes ou pièces isolantes pour la séparation électrique de régions de protection cathodiques dans les conduites de transport, caractérisées par le fait que les bagues isolantes ou pièces isolantes sont formées de bagues métalliques qui sont revêtues de polyamides aliphatiques contenant au moins 10 atomes de carbone par groupe carboxamide.

2. Bagues isolantes ou pièces isolantes selon la revendication 1, caractérisées par le fait que le polyamide aliphatique est le polylaurolactame.

3. Bagues isolantes ou pièces isolantes selon les revendications 1 et 2, caractérisées par le fait que l'épaisseur de la couche du polyamide est de 0,1 à 1,0 mm.

4. Urilisation des bagues isolantes ou pièces isolantes selon les revendications 1 à 3 dans les tuyauteries conduisant l'oxygène, à des pressions d'oxygène allant jusqu'à 100 bar et à des températures allant jusqu'à 60°C.